# EUROPÄISCHE PATENTSCHRIFT

(11) **EP 2 425 488 B1**
(45) Veröffentlichungstag und Bekanntmachung des Hinweises auf die Patenterteilung: **03.04.2013**
(21) Anmeldenummer: 10716487.3
(22) Anmeldetag: 22.04.2010
(51) Int. Cl.: H01Q 1/38, H01Q 7/00, H01Q 1/22, G06K 7/08

(54) **MAGNETISCH KOPPELNDE NAHFELD-RFID-ANTENNE**
MAGNETIC-COUPLING NEAR-FIELD RFID ANTENNA
ANTENNE RFID EN CHAMP PROCHE, À COUPLAGE MAGNÉTIQUE

(30) Priorität: 30.04.2009 DE 102009019546
(43) Veröffentlichungstag der Anmeldung: 07.03.2012
(73) Patentinhaber: Kathrein-Werke KG, 83022 Rosenheim (DE)
(72) Erfinder: ILIEV, Stoyan, 83026 Rosenheim (DE); LANKES, Thomas, 83026 Rosenheim (DE); SCHILLMEIER, Gerald, 81371 München (DE)
(74) Vertreter: Flach, Dieter Rolf Paul
(86) Internationale Anmeldenummer: PCT/EP2010/002480
(87) Internationale Veröffentlichungsnummer: WO 2010/124811

(56) Entgegenhaltungen:
- EP-A1- 1 528 621
- GB-A- 2 431 053
- XIANMING QING ET AL: "Characteristics of a Metal-Backed Loop Antenna and its Application to a High-Frequency RFID Smart Shelf" IEEE ANTENNAS AND PROPAGATION MAGAZINE, IEEE SERVICE CENTER, PISCATAWAY, NJ, US, Bd. 50, Nr. 2, 1. April 2009 (2009-04-01), Seiten 26-38, XP011263949 ISSN: 1045-9243

## Beschreibung

Die Erfindung betrifft eine magnetisch koppelnde Nahfeld-RFID-Antenne nach dem Oberbegriff des Anspruches 1.

Kontaktlose Identifikationssysteme mit einer kontaktlosen Energie- und Datenübertragung von einer Daten-Sende-/Empfangsvorrichtung auf einen tragbaren Datenträger über elektrisches, magnetisches bzw. elektro-magnetisches Wechselfeld sind hinlänglich bekannt. Insbesondere bei der sogenannten oder Radiofrequenz-Identifizierung (RFID) handelt es sich um eine Möglichkeit, auf tragbaren Datenträgern befindliche Informationen kontaktlos auszulesen oder Daten auf diesen zu schreiben. Von daher eröffnet die RFID-Technik eine Vielzahl von Anwendungsmöglichkeiten, beispielsweise eröffnet sie die Möglichkeiten einer permanenten Überprüfung, ob z.B. bestimmte Güter oder Produkte in Lagern während Produktionsabläufen vorhanden sind oder ob bestimmte Güter mit bestimmten Ausstattungsmerkmalen an bestimmten Orten vorhanden sind.

RFID-Systeme haben mehrere Grundkomponenten und technische Eigenschaften, durch die sie definiert sind. Im allgemeinen ist ein sogenanntes Lesegerät, kurz auch Reader genannt, vorgesehen, welches mit einer Antenne in Verbindung steht. Über die Antenne wird vom Lesegerät ein entsprechendes Abfragesignal ausgesandt. Dieses von einem Tag empfangene Signal dient gleichzeitig zur Energieversorgung des Tags. Die entsprechenden Informationen werden auf dem Tag ausgelesen und an das Sende-Empfangs-Gerät, dem sogenannten Reader zurückgesandt, der über die Antenne das entsprechende Signal auffängt und auswertet. Es handelt sich dabei um einen bidirektionalen Sende-Empfangsweg in einem gleichen Frequenzbereich oder Frequenzband. Dazu sind in den unterschiedlichen Ländern gegebenenfalls unterschiedliche Frequenzbänder für diese Technik freigegeben.

Die erwähnten Tags umfassen üblicherweise neben einem Substrat, beispielsweise in Form einer gegebenenfalls biegbaren Folie, eine Datenträger-Antenne sowie eine zugehörige Schaltungsanordnung (Chip), in welcher die entsprechenden Informationen gespeichert sind, die nach Empfang eines Signals ausgelesen werden können.

In der RFID-Technik sind unterschiedliche Tag-Arten und in Abhängigkeit der Tag-Arten zum Teil auch unterschiedliche Empfangsmethoden (zum Teil auch frequenzabhängig) bekannt geworden.

Die entsprechenden Transponder, nachfolgend auch kurz als Tags bezeichnet, unterscheiden sich beispielsweise nach der Übertragungsfrequenz, aber auch nach ihrem Verwendungszweck.

Bekannt geworden sind beispielsweise dipol-förmige Tags, die die vom Reader ausgestrahlte Energie vor allem aus dem E-Feld oder einer Kombination aus dem E- und dem H-Feld, also dem elektromagnetischen Feld beziehen.

Zudem sind auch eher kleine schleifenförmige Tags bekannt geworden, die primär durch das H-Feld, also das magnetische Feld, angekoppelt werden.

Daneben gibt es auch Mischformen von Transpondern, d.h. Tags.

Ähnlich wie sich die Tags unterscheiden, d.h. ob die Tags primär auf den Empfang bzw. die Aussendung von E-Feldern, von H-Feldern oder auf die Kombination ausgerichtet sind, unterscheiden sich auch die Antennenkonzepte für RFID-Reader.

So werden üblicherweise als RFID-Antennen Patchantennen eingesetzt. Derartige Antennen weisen üblicherweise in ihrem Nahbereich eine sehr geringe Selektivität aus.

Daneben sind auch Schleifenantennen, insbesondere große Schleifenantennen bekannt geworden, die vor allem zum Senden und Empfangen mittels magnetischer Felder geeignet sind.

So ist beispielsweise gemäß der US 2008/0048867 A1 die Verwendung einer eher rechteckförmigen oder kreisförmigen RFID-Antenne bekannt geworden, die in Umfangsrichtung mit einer oder mehreren Kapazitäten bestückt ist. Die kapazitive Bestückung kann letztlich auch durch eine Unterbrechung oder mehrere Unterbrechungen in Umfangsrichtung der beispielsweise grundsätzlich eher kreisförmig gestalteten Antenne realisiert sein. Eine derartige Antenne soll sich insbesondere als UHF-RFID-Antenne unter Erzeugung einer magnetischen Kopplung mit im Antennebereich befindlichen Tags eignen. Allerdings erzeugen derartige Antennen eine nicht unbeachtliche elektromagnetische Strahlung senkrecht zur Schleifenachse ähnlich wie bei Dipolen. Zudem ist bei derartigen Antennen zur Erzielung einer Verbesserung die Verwendung eines Reflektors erforderlich. Auch deshalb ergibt die Antenne insgesamt eine vergleichsweise große Bauform auch aufgrund des nötigen Abstandes zwischen der Schleifenantenne und dem Reflektor. Dabei sollen gemäß dieser Vorveröffentlichung derartige Schleifen- oder Loop-Antennen erzeugt werden, bei denen die Länge der Schleifenabschnitte, die jeweils über einen Kondensator voneinander getrennt sind länger sein können als die Wellenlänge des Erreger-Signal.

Eine weitere segmentierte Schleifen- oder Loop-Antenne ist auch aus der Veröffentlichung "Segmented Magnetic Antennas for Near-field UHF RFID", Microwave Journal and Horizon House Publications, Vol. 50, No. 6 Juni 2007 bekannt geworden. Die Antenne weist grundsätzlich eine polygonale Form auf und ist hochgradig segmentiert. Jedes einzelne Segment ist aus einer Metallleitung gebildet, die einen in Reihe geschalteten Kondensator zum nächsten Segment umfasst. Aus dieser Veröffentlichung ist beispielsweise eine Acht-Polygonale-Antenne mit sechs Kondensatoren oder beispielsweise eine Sechszehn-Polygonale-Antenne mit fünfzehn Kondensatoren in einer Größe von 1 pF und einem Widerstand von 10 Q als bekannt zu entnehmen.

Ferner sind auch Antennenkonzepte bekannt geworden, bei denen Antennen auf der Basis einer Mikrostreifenleitung aufgebaut sind. Dies ist beispielsweise aus der US 2007/0268143 A1 als bekannt zu entnehmen. Derartige Antennen besitzen Längen ≥λ/2 und werden zur Realisierung einer E-Feld-Kopplung verwendet. Typischerweise ist die Länge einer derartigen Antenne größer als λ/2 (bezogen auf die Betriebsfrequenz) und kleiner also (wobei λ die Wellenlänge im Dielektrikum ist).

Derartige Antennen können als nicht strahlende Antennen realisiert sein, beispielsweise in Form von mäanderförmigen Antennen. Eine derartige mäanderförmige Antenne ist auf der Oberfläche eines Substrates (oberhalb einer Massefläche) angeordnet, wobei die mäanderförmige Antenne an ihrem einen Ende gespeist und an ihrem gegenüberliegenden Ende abgeschlossen ist, und zwar unter Verwendung gegenüber Masse geschalteten Widerstandes.

Bei einem derartigen Antennenaufbau können mittels E-Feld-Kopplung beispielsweise mit geeigneten Tags versehene Etiketten ausgelesen werden, die unmittelbar benachbart über die betreffende Antenne hinweg bewegt werden.

Eine gattungsbildende magnetisch koppelnde Antenne ist auch aus der GB 2 431 053 A bekannt geworden. Es handelt sich dabei um eine schleifenförmige Antenne, die parallel im Abstand zu einer Massefläche angeordnet ist. Die Antenne wird dabei an ihrem einen Ende gespeist und ist an ihrem anderen Ende über einen elektrischen Verbindungsdraht mit Masse kurzgeschlossen.

Die Länge der Antenne beträgt allgemein etwa das 1/10- bis 1/100-fache der Betriebswellenlänge. Von daher kann die Antenne beispielsweise bei einer Betriebsfrequenz von 13,56 MHz eine Länge von etwa 220 mm bis 2200 mm aufweisen.

Bei einem derartigen Aufbau der Antenne und einer derartigen Dimensionierung wird eine stehende Welle entlang der Länge der Antenne erzeugt, weshalb in den weiteren Ausführungsbeispielen dieser Vorveröffentlichung beschrieben ist, dass ein entsprechender Schwingkreis hinzugefügt werden muss, ebenso wie ein Anpassnetzwerk, um eine entsprechende Anpassung zu erzielen.

Zudem ist eine Antennenanordnung auch aus der Vorveröffentlichung Xianming Qing et al: "Characteristics of a Metal-Backed Loop Antenna and its Application to a High-Frequency RFID Smart Shelf", IEEE Antennas and Propagation Magazine, IEEE Service Center, Piscataway, NJ, US, Bd. 50, Nr. 2, 1. April 2009 (2009-04-01), Seiten 26-38, XP011263949, ISSN: 1045-9243 als bekannt zu entnehmen.

Beschrieben wird eine Loop-Antenne, also eine Schleifenantenne, die über einer metallischen Platte positioniert ist. Die beschriebene Schleifenantenne bildet mit den Kondensatoren des Anpassnetzwerkes einen Schwingkreis, wobei der Strom in der Loop-Antenne ein Maximum aufweist.

Demgegenüber ist es Aufgabe der vorliegenden Erfindung, eine verbesserte magnetisch koppelnde Nahfeld-RFID-Antenne zu schaffen, die eine möglichst kleine Bauform aufweist und dabei eine möglichst geringe Leistungsabstrahlung verursacht, um auch dadurch eine hohe Selektivität zu gewährleisten, so dass im unmittelbaren Nahfeld eines an der Antenne vorbeigeführten Tags sichergestellt ist, dass stets nur ein einziger unmittelbar im Antennenbereich befindlicher Tag ausgelesen werden kann.

Die Aufgabe wird erfindungsgemäß entsprechend den im Anspruch 1 angegebenen Merkmalen gelöst. Vorteilhafte Ausgestaltungen der Erfindung sind in den Unteransprüchen angegeben.

Im Rahmen der erfindungsgemäßen Lösung wird eine Nahfeld-RFID-Antenne vorgeschlagen, bei der die Leistungsabstrahlung auf ein Minimum reduziert ist. Mit anderen Worten lässt sich im Rahmen der Erfindung sicherstellen, dass beispielsweise weniger als 20%, insbesondere weniger als 15%, 10% oder sogar weniger als 8%, 6%, 4% oder sogar 2% der Leistung abgestrahlt wird.

Die erfindungsgemäße Antenne ist dabei auf magnetische Tags hin optimiert, also auf Tags, die überwiegend über das magnetische Feld gespeist und angesprochen werden. Dabei wird durch die erfindungsgemäße Antenne im Nahfeld ein starkes H-Feld erzeugt.

Die erfindungsgemäße Antenne weist dabei eine Schleifenform auf, die von der Grundform her durchaus in Bereichen variieren kann, beispielsweise kreisförmig, oval, quadratisch oder eher rechteckförmig, n-polygonal oder dergleichen sein kann. Entscheidungserheblich ist, dass die als schleifenförmige Antennen bezeichnete Antenneneinrichtung von einer Speisestelle über eine geschlossene Bahn möglichst nahe zur Speisestelle zurückgeführt und dort über einen Abschlusswiderstand gegenüber Masse abgeschlossen ist.

Die erfindungsgemäße Nahfeld-RFID-Antenne besteht aus einer Mikrostreifenleitung, die an ihrem einen Ende gespeist und am anderen Ende mit der Leitungsimpendanz abgeschlossen ist. Dadurch lässt sich eine rein fortschreitende Welle erzeugen. Die Länge L des Streifenleiters der rahmenförmigen Antenne beträgt dabei weniger als λ/2 (wobei λ die Wellenlänge, d.h. Betriebswellenlänge im Dielektrikum ist). Bevorzugt beträgt die Länge weniger als λ/3.

Der Spalt zwischen Speisepunkt und Abschlusswiderstand ist dabei idealerweise möglichst gering. Unabhängig davon, wie die Streifenleitungs-Rahmenantenne im Konkreten geformt ist, also ob sie eher kreisförmig, elliptisch, rechteckförmig etc. gestaltet ist. Dadurch lässt sich realisieren, dass die Stromrichtung zu einem bestimmten Zeitpunkt auf der gesamten Leitung immer gleich ist, wodurch sich eine gute Verstärkung des magnetischen Feldes und eine Reduzierung des elektrischen Feldes ergibt.

Ein weiterer Vorteil der erfindungsgemäßen Antenne gegenüber großen magnetischen (segmentierten) Antennen liegt in der Breitbandigkeit bezüglich der Anpassung. Dies liegt zum einen in der nicht resonanten Struktur des erfindungsgemäßen Antennenaufbaus begründet.

Die Erfindung wird nachfolgend anhand von Zeichnungen näher erläutert. Dabei zeigen im Einzelnen:
- Figur 1 :: eine schematische räumliche Darstellung einiger Objekte, die beabstandet voneinander an einer Nahfeld-RFID-Antenne vorbei bewegt werden;
- Figur 2 :: eine schematische Draufsicht auf ein erstes Ausführungsbeispiel einer Nahfeld-RFID-Antenne eines Readers;
- Figur 3 :: eine schematische Querschnittsdarstellung durch dieses Ausführungsbeispiel gemäß Figur 2; und
- Figur 4 :: ein zu Figur 2 abweichendes Ausführungsbeispiel.

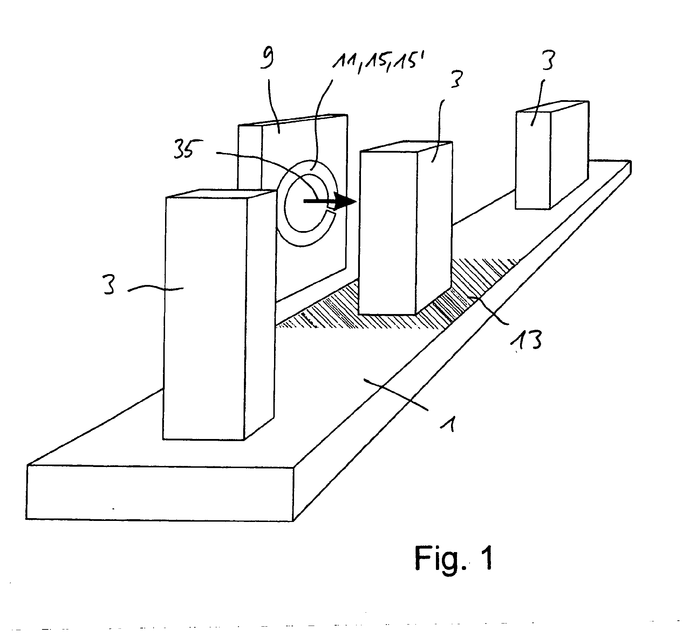

In Figur 1 ist beispielsweise schematisch eine Art Förderband oder Transportweg wiedergegeben, auf welchem mehrere Objekte 3 längs bewegt werden können, die sich im Abstand zueinander auf dem Laufband 1 befinden.

Jedes dieser Objekte 3 soll mit einem Tag (Transponder) versehen sein, der bevorzugt aus einem passiven Transponder, d.h. einem passiven Tag besteht, der die benötigte Energie nur aus dem magnetischen Antennenfeld entnimmt und mit Hilfe dieser Energie dann die im Tag gespeicherten Informationen auslesen und zur RFID-Antenne des Readers senden kann.

In Figur 1 ist dabei ferner eine einem Reader zugehörige magnetisch koppelnde Nahfeld-Antenne 11 gemäß eines erfindungsgemäßen Ausführungsbeispieles gezeigt, wobei an der Nahfeld-Antenne 11 im dichten Abstand auf dem Förderband/Transportweg 1 die einzelnen Objekte 3 nacheinander vorbeibewegt werden, um die auf dem Tag gespeicherten Informationen auszulesen. Durch die Nahfeld-Antenne 11 wird dabei ein eng umgrenzter Lesebereich 13 definiert, sodass stets immer nur ein sich im Lesebereich 13 befindliches Objekt anhand des darauf befindlichen Tags identifiziert werden kann.

Die Antenne ist hoch selektiv, so dass jeweils nur ein sich in unmittelbarer Nähe zur Nahfeld-Antenne 11 befindlicher Tag ausgelesen werden kann, nämlich in dem in Figur 1 wiedergegebenen Lesebereich 13. Die außerhalb des Lesebereiches befindlichen Objekte mit den separaten Tags können nicht ausgelesen werden.

Die erfindungsgemäße magnetisch koppelnde Nahfeld-Antenne besteht im gezeigten Ausführungsbeispiel aus einer schleifen- oder rahmenförmigen Struktur 15, die im gezeigten Ausführungsbeispiel als Streifenleitung realisiert ist. Der zugehörige Streifenleiter 19 ist auf der Oberseite 21a auf einem Substrat bzw. Dielektrikum 21 aufgebaut. Das Dielektrikum kann dann dabei die Elektrizitäts-Werte εᵣ von beispielsweise mehr als 2, 3, 4, 5, 6, 7, 8 oder 9 bzw. auch Werte kleiner als 10, 9, 8, 7, 6, 5, 4 oder 3, 2 aufweisen. Bevorzugt dient als Substrat 21 das Material FR4, dessen εᵣ typischerweise zwischen 4,0 und 4,7 liegt.

Insbesondere bei Verwendung eines Substrates 21 aus FR4 erweist es sich als günstig, wenn der Wellenwiderstand der Streifenleitung 50 Ohm oder ca. 50 Ohm ist.

Auf dem so geschilderten Substrat oder Dielektrikum 21 oder bei Luft als Dielektrikum unter Verwendung einer Trag- und Haltekonstruktion ist dann auf der Oberseite des Dielektrikums der zugehörige Streifenleiter 19 vorgesehen, der gemäß dem ersten Ausführungsbeispiel exakt kreisförmig verlaufend ausgebildet ist, und zwar mit einem Radius R. Der maximale Radius R der schleifen- oder rahmenförmigen Antenne wird letztlich von der Wellenlänge im Dielektrikum bestimmt. Der Umfang der schleifen- oder rahmenförmigen Antenne soll dabei kleiner als λ/2 sein. Typischerweise wird dieser Umfang U kleiner oder gleich λ/3 sein.

Soll die Antenne beispielsweise bei 865 MHz und auf einem Substrat mit einem εᵣ = 1 (Luft) betrieben werden, würde dies bedeuten, dass - wenn der Umfang kleiner als λ/2 sein soll - dieser Umfang letztlich einen Wert von kleiner als 17,3 cm aufweisen soll.

Im bevorzugten Bereich soll dieser Umfang wie erwähnt kleiner als λ/3 sein, also kleiner oder gleich 11,6 cm. Mit anderen Worten ergibt sich dadurch ein Radius, der kleiner oder gleich 2,7 cm ist und bevorzugt kleiner oder gleich 1,9 cm beträgt.

Theoretisch könnte der Radius minimal werden, also gegen 0 tendieren. Allerdings würde dadurch das Lesefeld, also der Lesebereich zu stark verkleinert werden. Von daher kann als minimaler Radius ein Wert von etwa 5 mm benannt werden.

Im gezeigten Ausführungsbeispiel ergibt sich, dass die Streifenleitung 19 an ihrem einen Ende 19a gegen Masse gespeist wird, wozu in dem Substrat eine senkrecht dazu verlaufende Bohrung oder Ausnehmung 23 vorgesehen ist, die mit einer entsprechenden Bohrung oder Ausnehmung 23' in der auf der Unterseite des Substrates/Dielektrikums 21 befindlichen Massefläche 25 fluchtet.

Hierdurch läuft eine Speiseleitung 27 zu einem Kontaktierungspunkt am unmittelbaren Ende 19a der Streifenleitung 19.

Das gegenüberliegende zweite Ende 19b der Streifenleitung 19 ist durch einen Abschlusswiderstand 29 abgeschlossen, also mit einem Widerstand entsprechend der Leitungsimpedanz.

Der zwischen den beiden Enden 19a und 19b der Streifenleiter 19 gebildete Spalt oder Abstand 31 soll dabei möglichst minimal sein. Die Größe des Spaltes oder Abstandes 31 zwischen dem Start- und dem Endpunkt 19a, 19b der Streifenleitung 19 soll dabei bevorzugt weniger als 10% und insbesondere weniger als 5%, 4%, 3%, 2% oder sogar weniger als 1% der Gesamtlänge der Streifenleitungen 19 betragen.

Der erwähnte Abschlusswiderstand 29 ist dabei mit der auf der Unterseite 21b des Substrats 21 befindlichen Massefläche 25 über eine oder mehrere Durchkontaktierungen 33 verbunden.

Möglich wäre auch, dass von dem Ende 19b der Streifenleitung 19 eine kurze Leitung auf die Unterseite 21b des Substrates/Dielektrikums 21 geführt ist, beispielsweise ebenfalls mittels einer Durchkontaktierung, wobei auf der Unterseite des Substrats oder Dielektrikums 21 in der Massefläche 25 eine ausreichende (kleindimensionierte) Aussparung vorgesehen ist, wobei in dieser Aussparung der Massefläche dann der Widerstand zum Abschluss des Streifenleiters 19 auf der Unterseite 21b des Substrates/Dielektrikums 21 realisiert sein kann, der dann dort über eine oder mehrere Leitungen direkt mit Masse 25 verbunden ist.

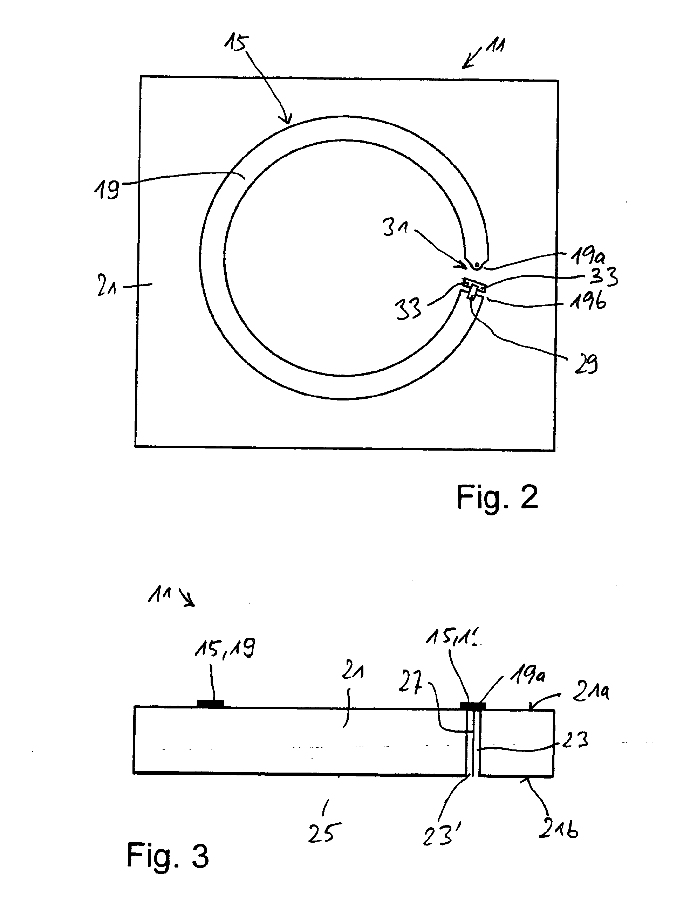

Im gezeigten Ausführungsbeispiel ist die Streifenleitung 19 gemäß Figur 2 kreisförmig gestaltet.

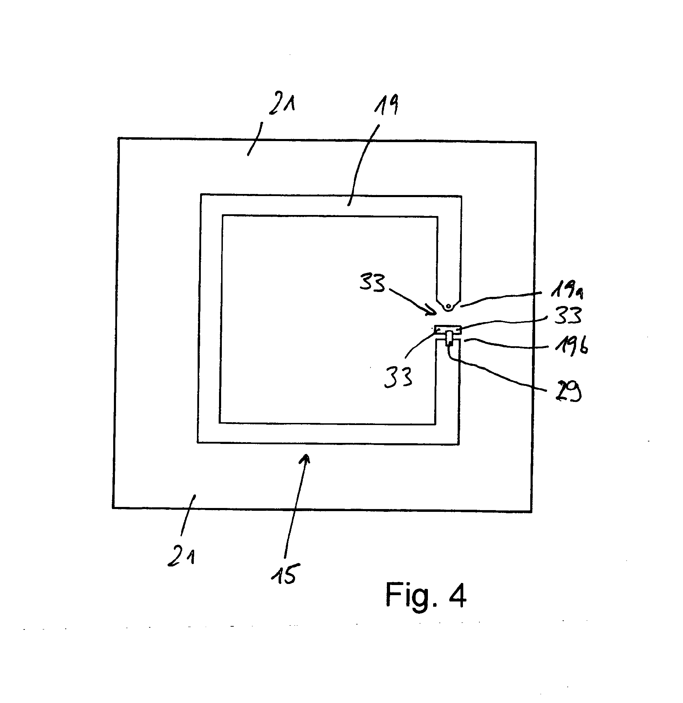

Die schleifen- oder rahmenförmige Streifenleiter-Antenne kann aber auch davon abweichende Formen aufweisen, beispielsweise oval gestaltet sein, rechteckförmig oder quadratisch, allgemein n-polygonal. In Figur 4 ist eine abweichende Ausführungsform der Erfindung gezeigt, bei der beispielsweise die Streifenleiter-Antenne 15 in Draufsicht einen quadratisch verlaufenden Streifenleiter wiedergibt. Aber auch hier ist der Abstand zwischen dem Anfangs- und dem Endpunkt 19a, 19b des Streifenleiters 19 möglichst klein und schmal gestaltet, so dass auch hier dieser Abstand bevorzugt weniger als 10%, d.h. weniger als 8%, 7%, 6%, 5%, 4%, 3%, 2% oder sogar weniger als 1% der Gesamtlänge des Streifenleiters 19 aufweist. Es können gerade und/oder kurvige Abschnitte zusammengefügt sein. Entscheidend ist lediglich, dass eine umlaufende Streifenleitung geschaffen wird, deren Anfang 19a und Ende 19b möglichst dicht beieinander liegen. Dadurch wird letztlich sichergestellt, dass eine derartige Antenne, wie vor allem gemäß Pfeilrichtung 35 in Figur 1 gezeigt ist, ein magnetisches H-Feld erzeugt, ohne dass in relevanter Weise elektromagnetische Energie abgestrahlt wird. Dadurch lässt sich im Rahmen der Erfindung sicherstellen, dass beispielsweise weniger als 20%, insbesondere weniger als 15%, 10% oder sogar weniger als 8%, 6%, 4% oder sogar 2% der Leistung abgestrahlt wird. Dadurch wird eine hochselektive nur im unmittelbar benachbarten Bereich zur Antenne wirksame magnetisch koppelnde Nahfeld-RFID-Antenne geschaffen, bei der sichergestellt ist, dass jeweils nur ein am nächsten liegender Tag ausgelesen werden kann.

Dabei wird ferner sichergestellt, dass keine oder nur eine minimale elektromagnetische Energie auf das mit dem Tag versehene Produkt eingeleitet wird, was in vielen Anwendungsfällen wie beispielsweise auch im medizinischen oder pharmazeutischen Bereich gewünscht wird.

Die erfindungsgemäße Antenne ist insbesondere für einen Frequenzbereich von 800 MHz bis 1 GHz geeignet, beispielsweise 865 MHz bis 870 MHz-Bereich geeignet. Sie kann aber ebenso beispielsweise im Bereich von 900 MHz bis 930 MHz eingesetzt werden.

Das Ausführungsbeispiel ist anhand eines dielektrischen Substrates beschrieben worden. Als Dielektrikum kann aber auch Luft in Frage kommen. In diesem Falle müsste der Streifenleiter 19 durch eine geeignete Tragkonstruktion verankert und gehalten werden und zwar im Abstand vor einer Massefläche 25.

## Patentansprüche

1. Magnetisch koppelnde Nahfeld-RFID-Antenne mit folgenden Merkmalen:
- die Nahfeld-RFID-Antenne (11) ist als magnetischer H-Feld-Koppler ausgebildet,
- die Nahfeld-RFID-Antenne (11) ist als schleifenund/oder rahmenförmige Antenne (15) ausgebildet,
- die schleifen- und/oder rahmenförmige Antenne .(15) umfasst einen schleifen- oder rahmenförmigen Streifenleiter (19),
- der Streifenleiter (19) ist im Abstand zu einer Massefläche (25) parallel dazu angeordnet,
- der Anfang (19a) und das Ende (19b) des Streifenleiters (19) enden in der Nähe zueinander unter Ausbildung eines Spaltes oder Abstandes (31),
- der Anfang (19a) des Streifenleiters (19) wird gegen Masse (25) gespeist,
**gekennzeichnet durch** die folgenden weiteren-Merkmale
- zwischen dem Streifenleiter (19) und der Massefläche (25) ist ein Dielektrikum (21) angeordnet,
- das Ende (19b) des Streifenleiters (19) ist mit einem Abschlusswiderstand (29) abgeschlossen,
- der Abschlusswiderstand (29) ist zwischen dem Ende (19b) des Streifenleiters (19) und der Massefläche (25) geschaltet,
- der Abschlusswiderstand (29) entspricht der Leitungsimpedanz, und
- der Umfang der schleifen- oder rahmenförmigen Antenne ist kleiner als λ/2, wobei λ die Betriebswollenlänge im Dielektrikum ist.

2. Nahfeld-RFID-Antenne nach Anspruch 1, **dadurch gekennzeichnet, dass** das Dielektrikum aus einem Substrat (21) gebildet ist.

3. Nahfeld-RFID-Antenne nach Anspruch 2, **dadurch gekennzeichnet, dass** das Dielektrikum ein εᵣ aufweist, welches größer oder gleich 1 und kleiner als 10 ist.

4. Nahfeld-RFID-Antenne nach Anspruch 2 oder 3, **dadurch gekennzeichnet, dass** das Substrat (21) aus FR4 besteht oder FR4 umfasst und/oder dass das Substrat ein Dielektrikum mit einer Dielektrizitätskonstante εᵣ aufweist, welche zwischen 4,0 und 4,7 liegt.

5. Nahfeld-RFID-Antenne nach einem der Ansprüche 1 bis 4, **dadurch gekennzeichnet, dass** der Radius der schleifenund/oder rahmenförmigen Antenne (15) kleiner als 2,7 cm ist.

6. Nahfeld-RFID-Antenne nach Anspruch 5, **dadurch gekennzeichnet, dass** der Radius der schleifen- und/oder rahmenförmigen Antenne (15) kleiner oder gleich 1,9 cm ist.

7. Nahfeld-RFID-Antenne nach einem der Ansprüche 1 bis 6, **dadurch gekennzeichnet, dass** die schleifen- und/oder rahmenförmige Antenne (15) kreisförmig, oval, quadratisch, rechteckförmig oder n-polygonal mit gerade oder kurvig zusammengesetzten Abschnitten gebildet ist.

8. Nahfeld-RFID-Antenne nach einem der Ansprüche 1 bis 7, **dadurch gekennzeichnet, dass** der Umfang der schleifenoder rahmenförmigen Antenne kleiner als 17,3 cm, vorzugsweise kleiner als 11,6 cm ist.

9. Nahfeld-RFID-Antenne nach einem der Ansprüche 1 bis 8, **dadurch gekennzeichnet, dass** der Wellenwiderstand der Streifenleitung (19) 50 Ohm oder näherungsweise 50 Ohm beträgt, insbesondere bei einem Substrat bestehend aus oder unter Verwendung von FR4 und/oder unter Verwendung eines Substrates mit einer Dielektrizitätskonstante εᵣ zwischen 4,0 und 4,7.

10. Nahfeld-RFID-Antenne nach einem der Ansprüche 1 bis 9, **dadurch gekennzeichnet, dass** der Abschlusswiderstand (29) auf der Oberseite (21a) des Substrats (21) vorgesehen ist und über eine oder mehrere Durchkontaktierungen oder Verbindungsleitungen mit der auf der Unterseite (21b) des Substrats (21) vorgesehenen Massefläche (25) verbunden ist.

11. Nahfeld-RFID-Antenne nach einem der Ansprüche 1 bis 9, **dadurch gekennzeichnet, dass** der Abschlusswiderstand (29) in einem ausgenommenen Bereich von der Massefläche (25) getrennt und über eine oder mehrere Leitungen mit der Massefläche (25) verbunden ist und dass die gegenüberliegende Anschlussseite des Abschlusswiderstandes (29) über zumindest eine Leitung oder über eine Durchkontaktierung mit dem einen Ende (19b) des auf der Oberseite (21a) auf dem Substrat (21) befindlichen Streifenleiter (19) verbunden ist.

12. Nahfeld-RFID-Antenne nach einem der Ansprüche 1 bis 11, **dadurch gekennzeichnet, dass** der Abstand (31)zwischen dem Anfang (19a) und dem Ende (19b) des Streifenleiters (19) weniger als 10%, insbesondere weniger als 8%, 7%, 6%, 5%, 4%, 3%, 2% oder weniger als 1% der Gesamtlänge der Streifenleitung (19) beträgt.

13. Nahfeld-RFID-Antenne nach einem der Ansprüche 1 bis 12, **dadurch gekennzeichnet, dass** der Umfang der schleifenoder rahmenförmigen Antenne kleiner oder gleich λ/3 ist.

## Claims

1. A magnetically coupling near-field RFID antenna having the following features:
- the near-field RFID antenna (11) is embodied as a magnetic H-field coupler,
- the near-field RFID antenna (11) is embodied as a looped and/or frame-shaped antenna (15),
- the looped and/or frame-shaped antenna (15) comprises a looped or frame-shaped strip conductor (19),
- the strip conductor (19) is arranged set apart from a ground surface (25) parallel thereto,
- the start (19a) and the end (19b) of the strip conductor (19) end close to each other, forming a gap or spacing (31),
- the start (19a) of the strip conductor (19) is fed to ground (25),
**characterized by** the following further features
- a dielectric (21) is arranged between the strip conductor (19) and the ground surface (25),
- the end (19b) of the strip conductor (19) is terminated by a terminating resistor (29),
- the terminating resistor (29) is connected between the end (19b) of the strip conductor (19) and the ground surface (25),
- the terminating resistor (29) corresponds to the line impedance, and
- the circumference of the looped or frame-shaped antenna is less than λ/2, λ being the operating wavelength in the dielectric.

2. The near-field RFID antenna as claimed in Claim 1, wherein the dielectric is formed from a substrate (21).

3. The near-field RFID antenna as claimed in Claim 2, wherein the dielectric has an εᵣ which is greater than or equal to 1 and less than 10.

4. The near-field RFID antenna as claimed in Claim 2 or Claim 3, wherein the substrate (21) consists of FR4 or comprises FR4 and/or wherein the substrate has a dielectric having a dielectric constant εᵣ lying between 4.0 and 4.7.

5. The near-field RFID antenna as claimed in any one of Claims 1 to 4, wherein the radius of the looped and/or frame-shaped antenna (15) is less than 2.7 cm.

6. The near-field RFID antenna as claimed in Claim 5, wherein the radius of the looped and/or frame-shaped antenna (15) is less than or equal to 1.9 cm.

7. The near-field RFID antenna as claimed in any one of Claims 1 to 6, wherein the looped and/or frame-shaped antenna (15) is formed so as to be circular, oval, square, rectangular or n-polygonal with portions assembled in a straight or curved manner.

8. The near-field RFID antenna as claimed in any one of Claims 1 to 7, wherein the circumference of the looped or frame-shaped antenna is less than 17.3 cm, is preferably less than 11.6 cm.

9. The near-field RFID antenna as claimed in any one of Claims 1 to 8, wherein the wave resistance of the strip line (19) is 50 ohms or approximately 50 ohms, in particular in a substrate consisting of or using FR4 and/or using a substrate having a dielectric constant εᵣ of between 4.0 and 4.7.

10. The near-field RFID antenna as claimed in any one of Claims 1 to 9, wherein the terminating resistor (29) is provided on the upper side (21a) of the substrate (21) and is connected to the ground surface (25), which is provided on the underside (21b) of the substrate (21), via one or more through-contacts or connecting lines.

11. The near-field RFID antenna as claimed in any one of Claims 1 to 9, wherein the terminating resistor (29) is separated in a recessed region from the ground surface (25) and is connected to the ground surface (25) via one or more lines and wherein the opposite connection side of the terminal resistor (29) is connected to one end (19b) of the strip conductor (19), which is located on the upper side (21a) on the substrate (21), via at least one line or via a through-contact.

12. The near-field RFID antenna as claimed in any one of Claims 1 to 11, wherein the spacing (31) between the start (19a) and the end (19b) of the strip conductor (19) is less than 10 %, in particular less than 8 %, 7 %, 6 %, 5 %, 4 %, 3 %, 2 % or less than 1 % of the total length of the strip line (19).

13. The near-field RFID antenna as claimed in any one of Claims 1 to 12, wherein the circumference of the looped or frame-shaped antenna is less than or equal to λ/3.

## Revendications

1. Antenne RFID de champ proche à couplage magnétique, comprenant les éléments suivants :
- l'antenne RFID de champ proche (11) est réalisée sous forme de coupleur magnétique à champ H,
- l'antenne RFID de champ proche (11) est réalisée comme une antenne (15) en forme de boucle ou en forme de cadre,
- l'antenne (15) en forme de boucle ou en forme de cadre inclut un conducteur en ruban (19) en forme de boucle ou en forme de cadre,
- le conducteur en ruban (19) est agencé à distance d'une surface de masse (25) parallèlement à celle-ci,
- le début (19a) et la fin (19b) du conducteur en ruban (19) se terminent au voisinage l'un de l'autre en formant un intervalle ou une distance (31),
- le début (19a) du conducteur en ruban (19) est mis à la masse (25), **caractérisée par** les caractéristiques suivantes
- un diélectrique (21) est agencé entre le conducteur en ruban (19) et la surface de masse (25),
- la fin (19b) du conducteur en ruban (19) est terminée avec une résistance de terminaison (29),
- la résistance de terminaison (29) est branchée entre la fin (19b) du conducteur en ruban (19) et la surface de masse (25),
- la résistance de terminaison (29) correspond à l'impédance de ligne, et
- la circonférence de l'antenne en forme de boucle ou en forme de cadre est inférieure à λ/2, où λ est la longueur d'onde en fonctionnement dans le diélectrique.

2. Antenne RFID de champ proche selon la revendication 1, **caractérisée en ce que** le diélectrique est formé par un substrat (21).

3. Antenne RFID de champ proche selon la revendication 2, **caractérisée en ce que** le diélectrique présente une εᵣ qui est supérieure ou égale à 1 et inférieure à 10.

4. Antenne RFID de champ proche selon la revendication 2 ou 3, **caractérisée en ce que** le substrat (21) est constitué en FR4 ou inclut du FR4, et/ou **en ce que** le substrat comprend un diélectrique avec une constante diélectrique εᵣ qui est comprise entre 4,0 et 4,7.

5. Antenne RFID de champ proche selon l'une des revendications 1 à 4, **caractérisée en ce que** le rayon de l'antenne en forme de boucle ou en forme de cadre (15) est inférieur à 2,7 cm.

6. Antenne RFID de champ proche selon la revendication 5, **caractérisée en ce que** le rayon de l'antenne en forme de boucle et/ou en forme de cadre (15) est inférieur ou égal à 1,9 cm.

7. Antenne RFID de champ proche selon l'une des revendications 1 à 6, **caractérisée en ce que** l'antenne en forme de boucle et/ou en forme de cadre (15) a une forme circulaire, ovale, carrée, rectangulaire ou polygonale à n côtés avec des tronçons rectilignes ou courbes assemblés.

8. Antenne RFID de champ proche selon l'une des revendications 1 à 7, **caractérisée en ce que** la circonférence de l'antenne en forme de boucle ou en forme de cadre est inférieure à 17,3 cm, de préférence inférieure à 11,6 cm.

9. Antenne RFID de champ proche selon l'une des revendications 1 à 8, **caractérisée en ce que** l'impédance propre du conducteur en ruban (19) s'élève à 50 ohms ou approximativement 50 ohms, en particulier avec un substrat constitué en FR4 ou en utilisant du FR4 et/ou en utilisant un substrat avec une constante diélectrique εᵣ entre 4,0 et 4,7.

10. Antenne RFID de champ proche selon l'une des revendications 1 à 9, **caractérisée en ce que** la résistance de terminaison (29) est prévue sur la face supérieure (21a) du substrat (21) et est reliée à la surface de masse (25) prévue sur la face inférieure (21 b) du substrat (21) par un ou plusieurs trous métallisés, ou une ou plusieurs lignes de liaison.

11. Antenne RFID de champ proche selon l'une des revendications 1 à 9, **caractérisée en ce que** la résistance de terminaison (29) est séparée de la surface de masse (25) dans une zone évidée, et est reliée à la surface de masse (25) par une ou plusieurs lignes, et **en ce que** le côté de connexion opposé de la résistance de terminaison (29) est relié via au moins une ligne ou via un trou métallisé à l'une des extrémités (19b) du conducteur en ruban (19) qui se trouve sur la face supérieure (21 a) sur le substrat (21).

12. Antenne RFID de champ proche selon l'une des revendications 1 à 11, **caractérisée en ce que** la distance (31) entre le début (19a) et la fin (19b) du conducteur en ruban (19) s'élève à moins de 10 %, en particulier moins de 8 %, 7 %, 6 %, 5 %, 4 %, 3 %, 2 %, ou moins de 1 % de la longueur totale du conducteur en ruban (19).

13. Antenne RFID de champ proche selon l'une des revendications 1 à 12, **caractérisée en ce que** la circonférence de l'antenne en forme de boucle ou en forme de cadre est inférieure ou égale à λ/3.
